# EUROPÄISCHE PATENTSCHRIFT

(11) **EP 1 970 260 B1**
(45) Veröffentlichungstag und Bekanntmachung des Hinweises auf die Patenterteilung: **21.04.2010**
(21) Anmeldenummer: 08004251.8
(22) Anmeldetag: 07.03.2008
(51) Int. Cl.: B60R 19/36

(54) **Crashbox und Kraftfahrzeug-Stoßfängeranordnung**
Crashbox and motor vehicle bumper arrangement
Crashbox et agencement de pare-chocs de véhicule automobile

(30) Priorität: 12.03.2007 DE 102007012137
(43) Veröffentlichungstag der Anmeldung: 17.09.2008
(73) Patentinhaber: Benteler Automobiltechnik GmbH, 33102 Paderborn (DE)
(72) Erfinder: Wang, Hui, 33102 Paderborn (DE); Paare, Mirko, 33106 Paderborn (DE); Handing, Christian, 33449 Langenberg (DE)
(74) Vertreter: Ksoll, Peter

(56) Entgegenhaltungen:
- EP-A- 1 792 786
- WO-A-2005/120903
- DE-A1- 10 014 469
- DE-A1- 10 140 503
- DE-A1-102004 041 476

## Beschreibung

Die Erfindung betrifft eine Crashbox zur Eingliederung zwischen dem Stoßfängerquerträger und einem Fahrzeuglängsträger eines Kraftfahrzeugs sowie eine Kraftfahrzeug-Stoßfängeranordnung mit einer solchen Crashbox.

Stoßfängersysteme werden heutzutage bei Kraftfahrzeugen standardmäßig sowohl front- als auch heckseitig eingebaut um die Stoßenergie kleinerer Stöße abzufangen, so dass die eigentliche Tragstruktur des Kraftfahrzeugs möglichst nicht beschädigt wird. Ein Stoßfängersystem besteht üblicherweise aus einem Querträger, der unter Eingliederung von Crashboxen quer zu den Längsträgern des Kraftfahrzeugrahmens festlegbar ist. Der Querträger dient dazu, die aus einem Anprall resultierende Energie in die Crashboxen einzuleiten, wo die Stoßenergie üblicherweise in Verformungsarbeit umgewandelt werden soll. Das Stoßfängersystem wird dabei so aufeinander abgestimmt, dass die Crashboxen jeweils möglichst mittig auf den Längsträgern des Kraftfahrzeugs sitzen und die Stoßenergie über den Querträger mit einem möglichst geringen Biegemoment in die Crashboxen und damit auch in die Längsträger eingeleitet wird.

Crashboxen werden heute vielfach über Flanschplatten mit den Längsträgern verschraubt. Eine solche, in der Praxis bewährte, Crashbox geht aus der DE 100 14 469 A1 hervor.

Die DE 197 00 022 A1 beschreibt einen Stoßfänger mit Crashboxen bzw. Pralldämpfern, die zwei hintereinander geschaltete Deformationsglieder umfassen, von denen das eine elastisch verformbar und das andere bleibend verformbar ist.

Eine in der Praxis bewährte Crashbox, wie sie in der DE 100 57 311 A1 beschrieben ist, besteht aus einer im Querschnitt rechteckigen Konstruktion, bestehend aus Ober- und Unterschale. Diese sind im Gesenk U-förmig gebogen und miteinander gefügt. Anschließend wird die Crashbox mit einer längsträgerseitigen Flanschplatte versehen. Diese Bauart zeichnet sich durch eine hohe Quersteifigkeit aus.

Aus der DE 43 16 164 A1 ist eine Stoßfängeranordnung für ein Kraftfahrzeug bekannt, welche ein aus zwei Längenabschnitten bestehendes Stülprohr umfasst. Die Längenabschnitte weisen unterschiedliche Querschnitte auf. Der Längenabschnitt mit dem kleineren Querschnitt ist mit dem Stoßfängerquerträger verbunden, während der Längenabschnitt mit dem größeren Querschnitt am Chassis des Kraftfahrzeugs festgelegt ist. Bei einem Aufprall verformt sich der kleinere Längenabschnitt in den größeren Längenabschnitt hinein. Hierbei stülpt sich die Wandung des längeren Abschnitts um und rollt in den größeren Längenabschnitt ab. Solche Stülprohre bieten jedoch nur eine geringe Seitensteifigkeit.

Weitere Vorschläge von Crashboxen bzw. Kraftfahrzeug-Stoßfängeranordnungen gehen aus der DE 10 2004 041 476 A1, der DE 10 2005 026 444 A1 und der DE 1 172 558 A hervor.

Die DE 297 15 786 U1 offenbart einen Stoßfänger mit einer Crashbox in Form eines einteiligen Stülprohrs, wobei der äußere Rohrteil des Stülprohrs in einem Faltkörper geführt ist. Auch die DE 269 02 072 U1 beschreibt eine Crashbox mit einem Stülprohr. Bei beiden vorerwähnten Crashbox-Lösungen sind die längsträgerseitigen Enden der Stülprohre um 180° umgeformt, so dass die Enden doppelwandig ausgeführt sind.

Bei den meisten der bekannten Vorschläge wird der zur Verfügung stehende Bauraum zur Energieabsorption im Falle eines Anpralls nicht optimal ausgenutzt, weil die Crashboxen im Zuge der Verformung einen Block bilden, der den Verformungsweg verringert. Die Stülprohrlösungen sind fertigungstechnisch aufwendig und insbesondere im Bereich der längsträgerseitigen Umformung riss- und demzufolge versagensanfällig.

Zum Stand der Technik zählt weiterhin eine Crashbox, wie in der WO 2005/120903 A1 beschrieben. Die Crashbox besitzt ein Längsprofil, das aus zwei U-förmig konfigurierten Schalenkörpern gebildet ist, welche sich endseitig ihrer Seitenschenkel überlappen und am Längsprofil eine längsträgerseitige Flanschplatte mit einer Öffnung vorgesehen ist. Die Ränder der Öffnung sind in Richtung zum Längsprofil umgebogen. Das Längsprofil ist mit der Flanschplatte verschweißt.

In der nicht vorveröffentlichten EP 1 792 786 A2 wird eine Crashbox beschrieben bestehend aus einem Deformationsprofil und einer Flanschplatte, die als Faltkonstruktion ausgebildet ist.

Der Erfindung liegt ausgehend vom Stand der Technik die Aufgabe zu Grunde, eine Crashbox funktional zu verbessern und eine Kraftfahrzeug-Stoßfängeranordnung zu schaffen, welche eine größtmögliche Ausnutzung des zur Verfügung stehenden Bauraums und Verformungsweg erlaubt.

Die Lösung des die Crashbox betreffenden Teils der Aufgabe zeigt Anspruch 1 auf.

Die Crashbox weist ein Längsprofil aus zwei U-förmig konfigurierten Schalenkörpern auf, wobei sich die Schalenkörper endseitig ihrer Schenkel überlappen. Hier sind sie gefügt, vorzugsweise schweißtechnisch, beispielsweise durch eine Rollschweißnaht. Zur Festlegung der Crashbox an einem Fahrzeuglängsträger ist am längsträgerseitigen Ende des Längsprofils eine Flanschplatte vorgesehen.

Erfindungswesentlich ist der schalenförmige Aufbau des Längsprofils aus zwei vorzugsweise identischen U-förmig konfigurierten Schalenkörpern, welche sich endseitig ihrer Seitenschenkel überlappen. Durch die Materialdopplung im Bereich der sich überlappenden Schenkel der Schalenkörper besitzt die Crashbox eine hohe Seitensteifigkeit. Diese ist deutlich höher als bei Längsprofilen aus einteiligen Rohrkörpern. Durch Einstellung des Überlappungsgrades kann die Seitensteifigkeit auf verschiedene Laststufen, je nach Fahrzeugtyp, eingestellt werden. Die hohe Seitensteifigkeit wirkt sich zudem vorteilhaft im Falle eines Abschleppvorgangs aus.

Erfindungswesentlich ist weiterhin, dass das Längsprofil einen rechteckigen Querschnitt besitzt und die Öffnung in der Flanschplatte ebenfalls einen rechteckigen Querschnitt besitzt. Der rechteckige Querschnitt des Längsprofils gewährleistet ein hohes Widerstandsmoment. Die rechteckige Öffnung in der Flanschplatte ist konfigurativ auf den Querschnitt des Längsprofils angepasst, wobei das Längsprofil fluchtend zur Öffnung ausgerichtet und mit der Flanschplatte gefügt ist.

Der endseitige Kragen ist in Richtung zum Längsprofil hin umgestellt. Hierbei verläuft der Kragen radial kranzförmig um den Umfang des Längsprofils. Der Kragen wird vorteilhafterweise von Kragenabschnitten gebildet, wobei jeder Kragenabschnitt einteiliger Bestandteil eines Schalenkörpers ist.

Der Kragen ist in Richtung zum Längsprofil hin umgestellt, und zwar mit einem Winkel von 20° bis 70°, gemessen zwischen der Wand, also einem Steg oder Schenkel, des Längsprofils und dem Kragen.

Das Energieabsorptionsvermögen der erfindungsgemäßen Crashbox ist optimiert, da sich das Längsprofil bei einem Anprall in Längsrichtung verlagert und nach innen in den Längsträger hinein umstülpt. Das Längsprofil wird durch die Öffnung im Flansch in den Längsträger des Kraftfahrzeugrahmens geschoben. Auf diese Weise kann der vorhandene Bauraum vollständig als Verformungsweg genutzt werden. Durch die gleichmäßige Verformung entsteht ein nahezu konstantes Kraftniveau. Insgesamt wird ein deutlich gesteigertes Energieaufnahmevermögen erreicht.

Vorteilhafte Ausgestaltungen und praktische Weiterbildungen der erfindungsgemäßen Crashbox sind Gegenstand der abhängigen Ansprüche 2 bis 12.

Erfindungsgemäß ist am längsträgerseitigen Ende des Längsprofils ein nach außen umgeformter Kragen vorgesehen.

Das Längsprofil kann mit dem Kragen vor der Flanschplatte also auf der dem Längsprofil zugewandten Seite der Flanschplatte festgelegt sein. Hierbei kann eine Schweißnaht von vorne zwischen dem umgestellten Kragen und der Flanschplatte gelegt werden. Dies ist herstellungstechnisch vorteilhaft und gewährleistet eine stabile Anbindung des längsträgerseitigen Endes des Längsprofils an der Flanschplatte. Im Falle eines Anpralls und des Einstülpens des Längsprofils durch die Öffnung in der Flanschplatte wird die Schweißverbindung durch die Flanschplatte selbst gestützt.

Das Längsprofil kann auch die Öffnung in der Flanschplatte durchsetzten, wobei der Kragen auf der vom Längsprofil abgewandten Seite der Flanschplatte anliegt und hier mit der Flanschplatte gefügt ist, vorzugsweise wiederum schweißtechnisch.

Für die Praxis vorteilhaft wird eine Umstellung des Kragens angesehen, bei der der Winkel zwischen der Wand des Längsprofils und dem Kragen zwischen 40° und 50° beträgt, insbesondere wird ein Winkel von 45° als vorteilhaft angesehen. Eine solche umgestellte Kragenausführung ermöglicht einerseits eine zweckoptimierte Anbindung des Längsprofils über den Kragen an der Flanschplatte und andererseits lässt diese Ausgestaltung einen vorteilhaften Einfluss auf den Stülpvorgang erwarten. Insbesondere sind die Druck-Zug-Spannungen im Bereich der Umformung des Kragens in einem bauteilerträglichen und belastungsgerechten Maß im Gegensatz zu der aus dem Stand der Technik bekannten Umformung des Kragens.

Mit dem Kragen liegt das Längsprofil an der Flanschplatte an und ist dort an die Flanschplatte angeschweißt. Dies kann mittels einer durchgehend umlaufenden Schweißnaht oder einer unterbrochenen Schweißnaht bzw. einer Punktschweißnaht erfolgen. Durch Einstellung der geometrischen Konfiguration des Kragens, insbesondere der Länge seiner Randschenkel, des Radius der Umformung und des Winkels der Randschenkel des Kragens zum Körper des Längsprofils kann die Steifigkeit des Kragens eingestellt werden. Hierdurch wird der funktional gewünschte Stülpvorgang bzw. dessen Initialisierung im Falle eines Anpralls gesteuert bzw. eingeleitet.

Für die Praxis vorteilhaft wird angesehen, wenn das aus den Schalenkörpern gebildete Längsprofil gerundete Längskanten aufweist. Das Längsprofil ist so im vertikalen Querschnitt im Wesentlichen rechteckig mit gerundeten Längskanten. Auch diese Maßnahme trägt zur Optimierung der Seitensteifigkeit bei und wirkt sich beim Deformations- bzw. Stülpvorgang positiv aus.

Das Längsprofil weist am querträgerseitigen Ende eine schräg verlaufende Stirnseite auf. Die vordere Stirnseite kann so in einbaugerechter Weise auf verschiedene Geometrien von Querträgern abgestimmt werden.

Zur Einstellung der Quer- bzw. Seitensteifgkeit und des Widerstandsmoments können die beiden Schalenkörper aus voneinander verschiedenen Werkstoffen, beispielsweise aus einer Kombination von Stählen unterschiedlicher Festigkeit, bestehen. Auch die Werkstoffe von Schalenkörper und Flanschplatte können variieren, gleichfalls kann die Wandstärke des Längsprofils variieren. Des Weiteren ist es möglich, dass die Schalenkörper und/oder die Flanschplatte voneinander verschiedene Wandstärken aufweisen. Diese Maßnahmen tragen ebenfalls zur Einstellung des Steifigkeitverhaltens und zur Einstellung eines gezielten Umformverhaltens der Crashbox bei.

Auch kann das Längsprofil durch eine geeignete Wärmebehandlung Zonen unterschiedlicher Werkstofffestigkeit aufweisen, um durch den Festigkeitsverlauf den Stülpvorgang gezielt zu richten.

Der eine Kraftfahrzeug-Stoßfängeranordnung betreffende Teil der Aufgabe wird durch die Merkmale von Anspruch 13 gelöst.

Danach kommt bei einer Kraftfahrzeug-Stoßfängeranordnung eine erfindungsgemäße Crashbox zum Einsatz, wie vorstehend charakterisiert und erläutert, wobei die Eingliederung der Crashbox und die Verbindung mit dem Längsprofil so ausgelegt sind, dass die Crashbox bei einem Anprall in den Längsträger verlagerbar ist. Hierbei ist die Crashbox so ausgeführt, dass sie vollständig in den Längsträger hineinstülpen kann. Hierdurch kann mehr Energie absorbiert werden, da keine Restblocklänge vorhanden ist und der zur Verfügung stehende Deformationsweg vollständig ausgenutzt werden kann.

Im Falle eines Anpralls wird das Längsprofil in das offene Ende des Längsträgers hineinverschoben. Dies erfolgt unter Beibehaltung der Festlegung des längsträgerseitigen Endes des Längsprofils an der Flanschplatte. Hierbei stülpt sich das Längsprofil im Verbindungsbereich mit der Flanschplatte um und rollt in den Längsträger hinein ab. Die Konfiguration des Kragens ist so ausgelegt, dass diese als Initiator für den Stülpvorgang fungiert.

Die Erfindung ist nachfolgend anhand eines Ausführungsbeispiels näher beschrieben. Es zeigen:
- Figur 1: in perspektivischer Darstellungsweise eine erfindungsgemäße Crashbox, festgelegt am Längsträger eines Kraftfahrzeugrahmens;
- Figur 2: die Crashbox in einer Ansicht schräg von hinten;
- Figur 3: die Crashbox in einer Ansicht seitlich von vorne;
- Figuren 4-7: das Längsprofil der Crashbox in verschiedenen Ansichten;
- Figuren 8 und 9: die beiden Schalenkörper eines Längsprofils, jeweils in einer Ansicht von vorne;
- Figur 10: in der Seitenansicht eine zweite Ausführungsform einer erfindungsgemäßen Crashbox;
- Figur 11: die Darstellung wie in der Figur 10, jedoch ohne Schweißnaht;
- Figur 12: eine Stirnansicht auf die Crashbox gemäß der Figur 11;
- Figur 13: die Crashbox in einer perspektivischen Ansicht schräg von vorne und
- Figur 14: Crashbox in einer perspektivischen Ansicht schräg von hinten.

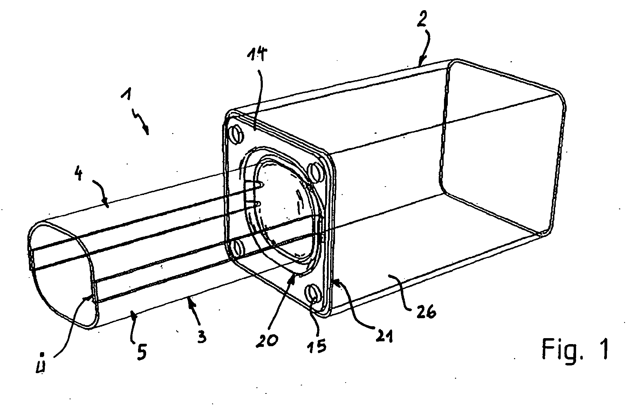

Figur 1 zeigt einen Ausschnitt aus einer Kraftfahrzeug-Stoßfängeranordnung mit der Darstellung einer Crashbox 1 und einem Längsträger 2 eines Kraftfahrzeugs. Die Crashbox 1 kommt in der Stoßfängeranordnung als energieabsorbierendes Deformationselement zwischen einem hier nicht dargestellten Querträger und dem Längsträger 2 zum Einsatz.

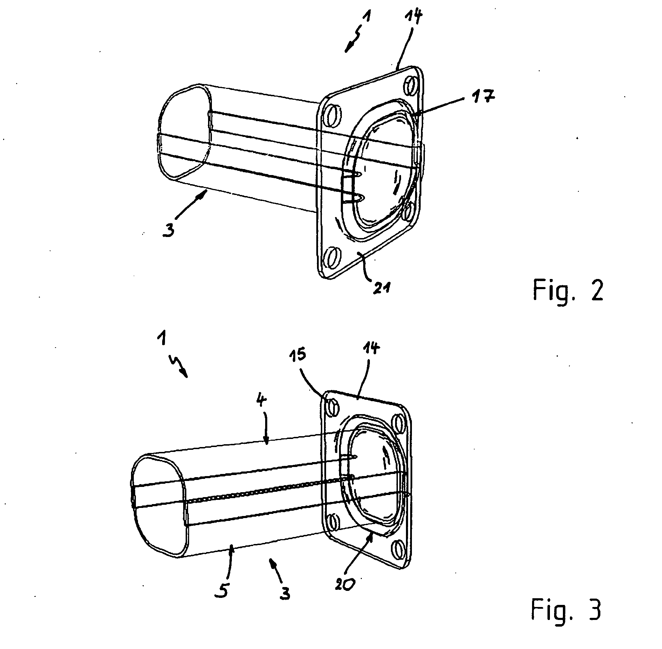

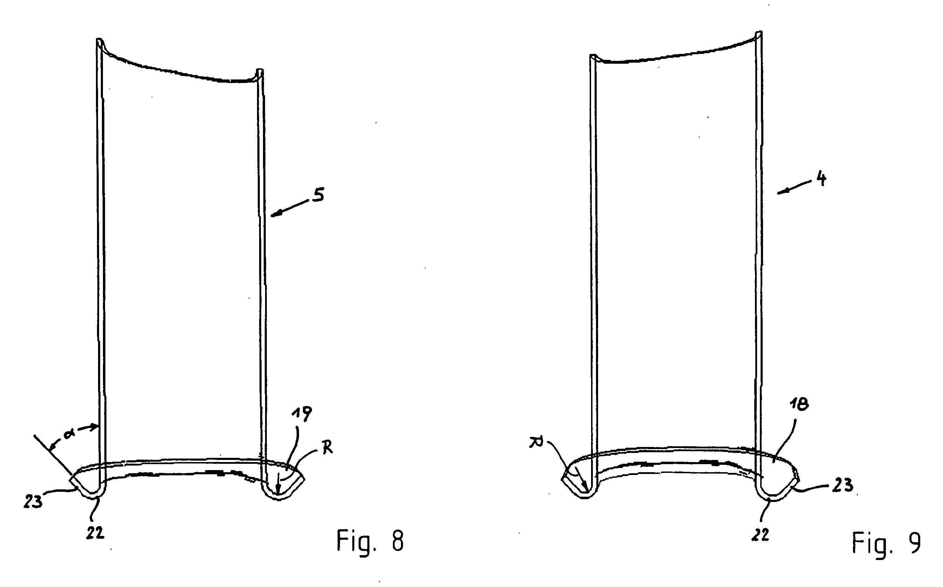

Die Crashbox 1, wie sie auch in den Figuren 2 und 3 zu erkennen ist, besteht aus Metall und besitzt ein Längsprofil 3 in Schalenbauweise, welches jeweils aus zwei Schalenkörpern 4, 5 zusammengesetzt ist (siehe auch Figuren 8 und 9). Die Schalenkörper 4, 5 sind U-förmig konfiguriert mit einem Steg 6, 7 und zwei Seitenschenkeln 8, 9 bzw. 10, 11. Die Schalenkörper 4, 5 sind konfigurativ aufeinander abgestimmt und überlappen sich endseitig ihrer Seitenschenkel 8, 9; 10, 11. Im Überlappungsbereich Ü sind sie gefügt, beispielsweise durch eine Rollschweißnaht. Durch Einstellung der Länge der Seitenschenkel 8, 9; 10, 11 und des Überlappungsmaßes im Überlappungsbereich Ü kann die Seitensteifigkeit der Crashbox 1 bestimmt werden.

Man erkennt des Weiteren, dass das Längsprofil 3 gerundete Längskanten 12, 13 aufweist. Dies ist sowohl fertigungstechnisch als auch hinsichtlich der Einleitung eines gezielten Deformationsvorganges vorteilhaft.

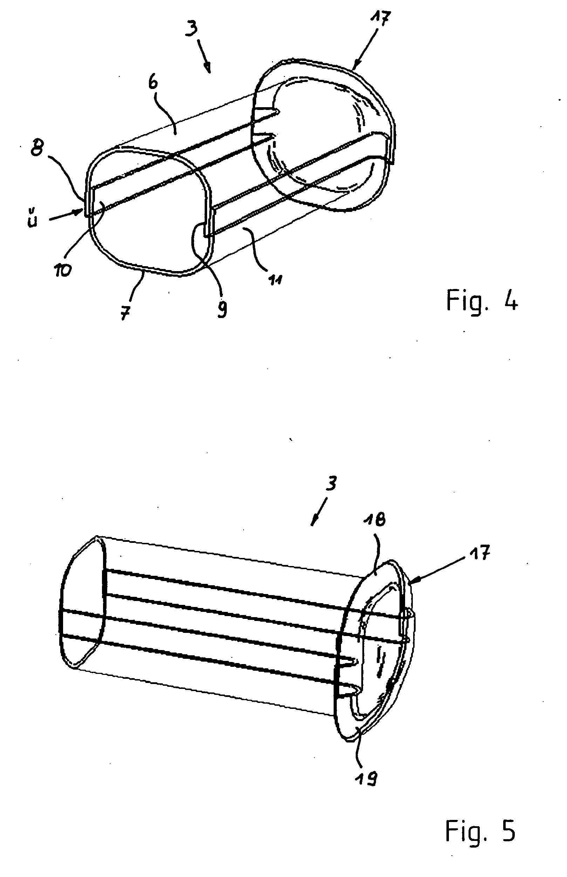

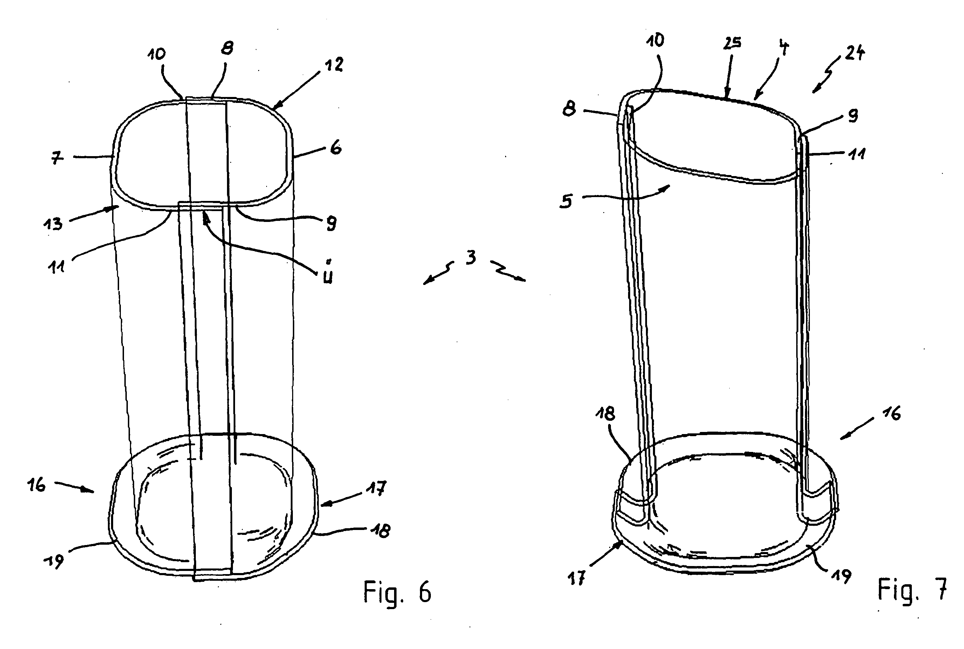

Längsträgerseitig ist am Längsprofil 3 eine Flanschplatte 14 vorgesehen, über welche die Crashbox 1 am Längsträger 2 festgelegt werden kann. Dies erfolgt über Montageöffnungen 15. Wie insbesondere anhand der Figuren 4 - 7 zu erkennen, ist am längsträgerseitigen Ende 16 des Längsprofils 3 ein nach außen umgeformter Kragen 17 ausgebildet. Der Kragen 17 ist in Richtung zum Längsprofil 3 hin umgestellt und verläuft kranzförmig radial um den Umfang des Längsprofils 3. Der Kragen 17 des Längsprofils 3 ist von Kragenabschnitten 18, 19 gebildet, die jeweils einstückige Bestandteile eines Schalenkörpers 4 bzw. 5 sind (siehe hierzu Figuren 8 und 9).

Das Längsprofil 3 durchsetzt eine zentrale Öffnung 20 in der Flanschplatte 14 und kommt mit dem Kragen 17 auf der vom Längsprofil 3 abgewandten Seite 21 der Flanschplatte 14, die in Richtung zum Längsträger 2 weist, zur Anlage. Über den Kragen 17 ist das Längsprofil 3 an der Flanschplatte 14 schweißtechnisch festgelegt. Die Öffnung 20 besitzt einen rechteckigen Querschnitt, der konfigurativ auf den rechteckförmigen Querschnitt des Längsprofils 3 angepasst ist. Das Längsprofil 3 ist fluchtend zur Öffnung 20 ausgerichtet.

Der Kragen 17 bzw. die Kragenabschnitte 18, 19 weisen im Querschnitt vom längsträgerseitigen Ende 16 ausgehend, einen Kreisbogenabschnitt 22 auf, welcher in einen geradlinig verlaufenden Randschenkel 23 endet. Die Randschenkel 23 sind in einem Winkel α in Richtung zum Längsprofil 3 hin angestellt. Bei der hier dargestellten Crashbox 1 liegt der Winkel α zwischen dem Längsprofil 3 und dem Kragen 17 zwischen 40° und 50°, insbesondere beträgt der Winkel α 45°. Der Winkel α wird gemessen zwischen dem Kragen 17 bzw. den Kragenabschnitten 18, 19 und den Seitenschenkeln 8, 9; 10, 11 bzw. den Stegen 6, 7. Der Radius R des Kreisbogenabschnitts 22 variiert über den Umfang im Verlauf der Kragenabschnitte 18, 19, so dass die Kragenabschnitte 18, 19 bei zusammengefügten Schalenkörpern 4, 5 passgerecht ineinander liegen.

Zur konfigurativen Anpassung des Längsprofils 3 an die Geometrie eines Querträgers weist das Längsprofil 3, bezogen auf die Einbausituation der Crashbox 1 in einem Kraftfahrzeug, am querträgerseitigen Ende 24 eine abgeschrägt verlaufende Stirnseite 25 auf.

Bei einem Anprall verlagert sich das Längsprofil 3 in Längsrichtung durch die Öffnung 20 in der Flanschplatte 14 hindurch und stülpt sich in das offene Ende 26 des Längsträgers 2 hinein. Die Festlegung des Längsprofils 3 über den Kragen 17 an der Flanschplatte 14 bleibt erhalten. Das Material des Längsprofils 3 stülpt sich durch die Öffnung 20 nach innen und rollt durch den Bereich des Kragens 17 in den Längsträger 2 hinein ab. Auf diese Weise erfolgt eine effektive Energieabsorption bei einem Anprall, bei dem der zur Verfügung stehende Bauraum vollständig als Verformungsweg ausgenutzt werden kann. Der Verformungsvorgang vollzieht sich bei einem nahezu konstanten Kraftniveau mit deutlich gesteigertem Energieaufnahmevermögen.

Zur Einstellung des Steifigkeitsverhaltens der Crashbox 1 ebenso wie des Verformungsverhaltens können die Schalenkörper 4, 5 und/oder die Flanschplatte 14 aus verschiedenen Werkstoffen bestehen, insbesondere aus Stählen unterschiedlicher Festigkeit. Ebenso kann die Wandstärke des Längsprofils 3 in dessen Längsrichtung variieren oder die Schalenkörper 4, 5 und/oder die Flanschplatte 14 voneinander verschiedene Wandstärken aufweisen.

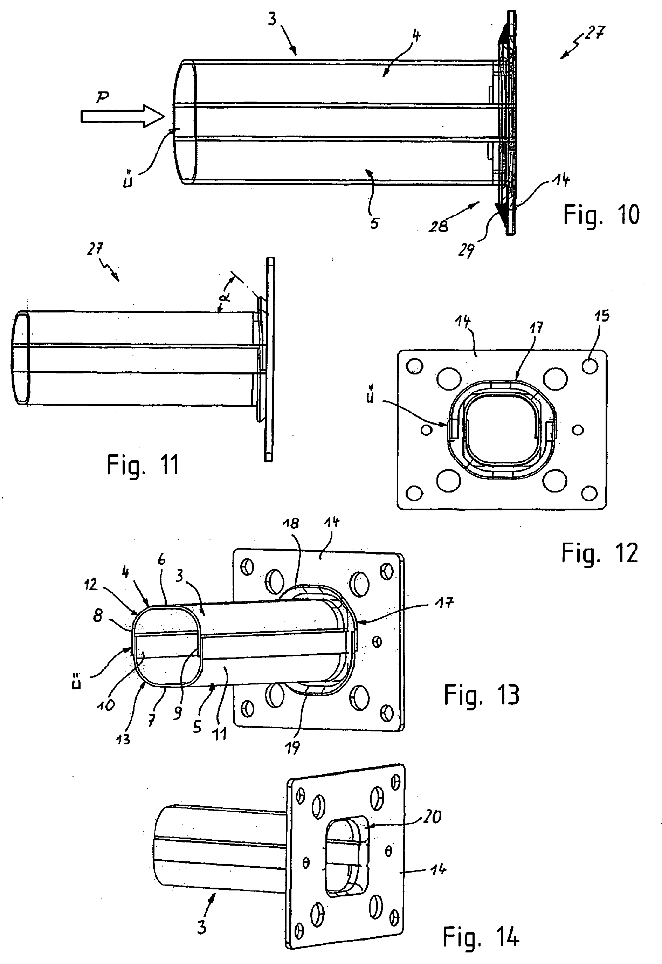

Anhand der Figuren 10 bis 14 ist eine weitere Ausführungsform einer Crashbox 27 beschrieben. Die Crashbox 27 entspricht vom grundsätzlichen Aufbau der zuvor erläuterten, so dass einander entsprechende Bauteile bzw. Bauteilkomponenten mit den gleichen Bezugszeichen versehen sind.

Die Crashbox 27 ist in Schalenbauweise hergestellt und besteht aus zwei Schalenkörpern 4, 5, die U-förmig konfiguriert sind mit einem Steg 6, 7 und zwei Seitenschenkel 8, 9 bzw. 10, 11. Die Schalenkörper 4, 5 sind identisch ausgeführt und werden zum Längsprofil 3 zusammengefügt, indem die Schalenkörper 4, 5 im Überlappungsbereich Ü zwischen den Seitenschenkeln 8, 9; 10, 11 miteinander verschweißt werden. Durch die Wandstärkenverdopplung im Überlappungsbereich Ü wird eine höhere Steifigkeit bei Seitenkräften erzielt. Das Längsprofil 3 weist so einen grundsätzlich rechteckförmig konfigurierten Querschnitt auf.

Die Flanschplatte 14 besitzt eine zentrale Öffnung 20 mit einem rechteckigen Querschnitt. Der rechteckige Querschnitt des Längsprofils 3 und der rechteckige Querschnitt der Öffnung 20 sind konfigurativ aufeinander angepasst. Das Längsprofil 3 ist fluchtend zur Öffnung 20 orientiert und mit der Flanschplatte 14 gefügt. Hierzu ist das Längsprofil 3 von vorne an die dem Längsprofil 3 zugewandte Seite 28 der Flanschplatte 14 angesetzt und mittels einer umlaufenden Schweißnaht 29 gefügt.

Auch bei der Crashbox 27 ist der Kragen 17 bzw. sind die Kragenabschnitte 18, 19 des Längsprofils 3 in Richtung zum Längsprofil 3 hin umgestellt und laufen in einen gradlinig verlaufenden Randschenkel 23 aus. Der Winkel α zwischen dem Kragen 17 und dem Längsprofil 3 liegt wiederum zwischen 40° und 50°, vorzugsweise bei ca. 45°.

Bei einem Anprall von vorne, wie durch den Pfeil P verdeutlicht, verlagert sich das Längsprofil 3 in Längsrichtung durch die Öffnung 20 in der Flanschplatte 14. Das Längsprofil 3 wird in das offene Ende eines Längsträgers umgestülpt. Das Material des Längsprofils 3 walkt hierbei durch die Öffnung 20, welche eine Umformkante definiert. Der Kragen 17 und die Schweißnaht 29 stützen sich an der vorderen Seite 28 der Flanschplatte 14 ab.

### Bezugszeichen:

- 1 -: Crashbox
- 2 -: Längsträger
- 3 -: Längsprofil
- 4 -: Schalenkörper
- 5 -: Schalenkörper
- 6 -: Steg
- 7 -: Steg
- 8 -: Seitenschenkel
- 9 -: Seitenschenkel
- 10 -: Seitenschenkel
- 11 -: Seitenschenkel
- 12 -: Längskante
- 13 -: Längskante
- 14 -: Flanschplatte
- 15 -: Montageöffnung
- 16 -: längsträgerseitiges Ende v. 3
- 17 -: Kragen
- 18 -: Kragenabschnitt
- 19 -: Kragenabschnitt
- 20 -: Öffnung
- 21 -: Seite v. 14
- 22 -: Kreisbogenabschnitt
- 23 -: Randschenkel
- 24 -: querträgerseitiges Ende v. 3
- 25 -: Stirnseite
- 26 -: Ende v. 2
- 27 -: Crashbox
- 28 -: Seite v. 14
- 29 -: Schweißnaht
- R -: Radius
- Ü -: Überlappungbereich
- α -: Winkel
- P -: Pfeil

## Patentansprüche

1. Crashbox zur Eingliederung zwischen dem Stoßfängerquerträger und einem Fahrzeuglängsträger eines Kraftfahrzeugs mit einem Längsprofil (3) aus zwei U-förmig konfigurierten Schalenkörpern (4, 5), welche sich endseitig ihrer Seitenschenkel (8, 9; 10, 11) überlappen und am Längsprofil (3) eine längsträgerseitige Flanschplatte (14) mit einer Öffnung (20) vorgesehen ist, wobei am längsträgerseitigen Ende (16) des Längsprofils (3) ein nach außen umgeformter Kragen (17) vorgesehen ist, welcher in Richtung zum Längsprofil (3) hin umgestellt ist, wobei der Winkel (α) zwischen dem Längsprofil (3) und dem Kragen (17) zwischen 20 ° und 70 ° beträgt, und der Kragen (17) an der Flanschplatte (14) anliegt und mit der Flanschplatte (14) gefügt ist, wobei das Längsprofil (3) und die Öffnung (20) einen rechteckigen Querschnitt besitzen und das Längsprofil (3) fluchtend zur Öffnung (20) ausgerichtet ist.

2. Crashbox nach Anspruch 1, **dadurch gekennzeichnet, dass** das Längsprofil (3) die Öffnung (20) in der Flanschplatte (14) durchsetzt und der Kragen (17) auf der vom Längsprofil (3) abgewandten Seite (21) der Flanschplatte (14) gefügt ist.

3. Crashbox nach Anspruch 1, **dadurch gekennzeichnet, dass** das Längsprofil (3) an der dem Längsprofil (3) zugewandten Seite (28) der Flanschplatte (14) anliegt und mit der Flanschplatte (14) gefügt ist.

4. Crashbox nach einem der Ansprüche 1 bis 3, **dadurch gekennzeichnet, dass** der Winkel (α) zwischen dem Längsprofil (3) und dem Kragen (17) zwischen 40° und 50° beträgt.

5. Crashbox nach wenigstens einem der Ansprüche 1 bis 4, **dadurch gekennzeichnet, dass** der Winkel (α) zwischen dem Längsprofil (3) und dem Kragen (17) 45° beträgt.

6. Crashbox nach wenigstens einem der Ansprüche 1 bis 5, **dadurch gekennzeichnet, dass** der Kragen (17) kranzförmig um den Umfang des Längsprofils (3) verläuft.

7. Crashbox nach wenigstens einem der Ansprüche 1 bis 6, **dadurch gekennzeichnet, dass** der Kragen (17) von Kragenabschnitten (18, 19) gebildet ist, wobei jeder Kragenabschnitt (18, 19) einteiliger Bestandteil eines Schalenkörpers (4, 5) ist.

8. Crashbox nach wenigstens einem der Ansprüche 1 bis 7, **dadurch gekennzeichnet, dass** das Längsprofil (3) gerundete Längskanten (12, 13) aufweist.

9. Crashbox nach wenigstens einem der Ansprüche 1 bis 8, **dadurch gekennzeichnet, dass** das Längsprofil (3) am querträgerseitigen Ende (24) eine schräg verlaufende Stirnseite (25) aufweist.

10. Crashbox nach wenigstens einem der Ansprüche 1 bis 9, **dadurch gekennzeichnet, dass** die Schalenkörper (4, 5) und/oder die Flanschplatte (14) aus verschiedenen Werkstoffen bestehen.

11. Crashbox nach wenigstens einem der Ansprüche 1 bis 10, **dadurch gekennzeichnet, dass** die Wandstärke des Längsprofils (3) variiert.

12. Crashbox nach wenigstens einem der Ansprüche 1 bis 11, **dadurch gekennzeichnet, dass** die Schalenkörper (4, 5) und/oder die Flanschplatte (14) voneinander verschiedene Wandstärken aufweisen.

13. Kraftfahrzeug-Stoßfängeranordnung mit einem quer zu den Längsträgern (2) des Kraftfahrzeugrahmens festlegbaren Querträger, wobei jeweils zwischen einem Längsträger (2) und dem Querträger eine Crashbox (1) gemäß einem der Ansprüche 1 bis 12 eingegliedert ist, **dadurch gekennzeichnet, dass** das Längsprofil (3) der Crashbox (1) in den Längsträger (2) verlagerbar ist.

14. Kraftfahrzeug-Stoßfängeranordnung nach Anspruch 13, **dadurch gekennzeichnet, dass** stich das Längsprofil (3) unter Beibehaltung der Festlegung des längsträgerseitigen Endes (16) an der Flanschplatte (14), von der Flanschplatte (14) ausgehend, in den Längsträger (2) umstülpt.

## Claims

1. Crash box for placement between the bumper beam and a side rail of a motor vehicle, with a longitudinal profile (3) made of two U-shaped shells (4, 5), their side limbs having overlapping ends (8, 9; 10, 11), and a side rail proximal flange plate (14) having an opening (20) on the longitudinal profile (3), wherein the side rail proximal end (16) of the longitudinal profile (3) is configured with a collar (17) which is turned outwards and which is turned over in the direction of the longitudinal profile, the angle (α) between the longitudinal profile (3) and the collar (17) being between 20° and 70°, and the collar (17) resting against and attached to the flange plate (14), the longitudinal profile (3) and the opening (20) having a rectangular cross-section and the longitudinal profile (3) being aligned with the opening (20).

2. Crash box according to claim 1, **characterised in that** the longitudinal profile (3) passes through the opening (20) in the flange plate (14), and the collar (17) is attached on the side (21) of the flange plate (14) facing away from the longitudinal profile (3).

3. Crash box according to claim 1, **characterised in that** the longitudinal profile (3) rests on the side (28) of the flange plate (14) facing towards the longitudinal profile (3) and is attached to the flange plate (14).

4. Crash box according to one of claims 1 to 3, **characterised in that** the angle (α) between the longitudinal profile (3) and the collar (17) is between 40° and 50°.

5. Crash box according to at least one of claims 1 to 4, **characterised in that** the angle (α) between the longitudinal profile (3) and the collar (17) is 45°.

6. Crash box according to at least one of claims 1 to 5, **characterised in that** the collar (17) runs around a circumference of the longitudinal profile (3) in the form of a ring.

7. Crash box according to at least one of claims 1 to 6, **characterised in that** the collar (17) is formed of collar portions (18, 19), with each of the collar portions (18, 19) being formed in one piece with one of the shells (4, 5).

8. Crash box according to at least one of claims 1 to 7, **characterised in that** the longitudinal profile (3) has rounded longitudinal edges (12, 13).

9. Crash box according to at least one of claims 1 to 8, **characterised in that** the longitudinal profile (3) has a slanted end surface (25) at the bumper beam proximal end (24).

10. Crash box according to at least one of claims 1 to 9, **characterised in that** the shells (4, 5) and/or the flange plate (14) are made of different materials.

11. Crash box according to at least one of claims 1 to 10, **characterised in that** the wall thickness of the longitudinal profile (3) varies.

12. Crash box according to at least one of claims 1 to 11, **characterised in that** the shells (4, 5) and/or the flange plate (14) have different wall thicknesses.

13. Bumper arrangement for a motor vehicle, with a bumper beam which can be fixed transversely to the side rails (2) of the vehicle chassis, a crash box (1) according to one of claims 1 to 12 being placed between a side rail (2) and the bumper beam in each case, **characterised in that** the longitudinal profile (3) of the crash box (1) can be displaced into the side rail (2).

14. Bumper arrangement for a motor vehicle according to claim 13, **characterised in that** the longitudinal profile (3) folds into the side rail (2) starting from the flange plate (14), while the side rail proximal end (16) remains secured to the flange plate (14).

## Revendications

1. Boîtier absorbeur d'énergie dit "crashbox" à intégrer entre la traverse de pare-chocs et un longeron d'un véhicule, qui comprend un profilé longitudinal (3) constitué de deux corps en coque (4, 5) configurés en forme de U, qui se chevauchent sur le côté terminal de leurs branches latérales (8, 9 ; 10, 11), et une plaque-bride (14) avec une ouverture (20) prévue sur le profilé longitudinal (3) du côté du longeron, dans lequel il est prévu, à l'extrémité (16) côté longeron du profilé longitudinal (3), une collerette (17) déformée vers l'extérieur, qui est rabattue en direction du profilé longitudinal (3), l'angle (α) entre le profilé longitudinal (3) et la collerette (17) étant compris entre 20° et 70°, dans lequel la collerette (17) est appliquée contre la plaque-bride (14) et est assemblée à la plaque-bride (14), dans lequel le profilé longitudinal (3) et l'ouverture (20) possèdent une section transversale de forme rectangulaire et le profilé longitudinal (3) est orienté en alignement vis-à-vis de l'ouverture (20).

2. Crashbox selon la revendication 1, **caractérisé en ce que** le profilé longitudinal (3) traverse l'ouverture (20) dans la plaque-bride (14), et la collerette (17) est assemblée sur le côté (21) de la plaque-bride (14) détourné du profilé longitudinal (3).

3. Crashbox selon la revendication 1, **caractérisé en ce que** le profilé longitudinal (3) est appliqué sur le côté (28) de la plaque-bride (14) tourné vers le profilé longitudinal (3) et est joint avec la plaque-bride (14).

4. Crashbox selon l'une des revendications 1 à 3, **caractérisé en ce que** l'angle (α) entre le profilé longitudinal (3) et la collerette (17) est compris entre 40° et 50°.

5. Crashbox selon l'une au moins des revendications 1 à 4, **caractérisé en ce que** l'angle (α) entre le profilé longitudinal (3) et la collerette (17) s'élève à 45°.

6. Crashbox selon l'une au moins des revendications 1 à 5, **caractérisé en ce que** la collerette (17) s'étend en formant une couronne autour de la périphérie du profilé longitudinal (3).

7. Crashbox selon l'une au moins des revendications 1 à 6, **caractérisé en ce que** la collerette (17) est formée par des tronçons de collerette (18, 19), tels que chaque tronçon de collerette (18, 19) forme un composant d'une seule pièce avec le corps en coque (4, 5).

8. Crashbox selon l'une au moins des revendications 1 à 7, **caractérisé en ce que** le profilé longitudinal (3) comporte des arêtes longitudinales (12, 13) arrondies.

9. Crashbox selon l'une au moins des revendications 1 à 8, **caractérisé en ce que** le profilé longitudinal (3) présente, à l'extrémité (24) côté traverse, une face frontale (25) qui s'étend en oblique.

10. Crashbox selon l'une au moins des revendications 1 à 9, **caractérisé en ce que** les corps en coque (4, 5) et/ou la plaque-bride (14) sont en différents matériaux.

11. Crashbox selon l'une au moins des revendications 1 à 10, **caractérisé en ce que** l'épaisseur de paroi du profilé longitudinal (3) varie.

12. Crashbox selon l'une au moins des revendications 1 à 11, **caractérisé en ce que** les corps en coque (4, 5) et/ou la plaque-bride (14) présentent des épaisseurs de paroi différentes les uns des autres.

13. Agencement de pare-chocs pour véhicule automobile, comprenant une traverse susceptible d'être immobilisée transversalement au longeron (2) du châssis du véhicule, dans lequel un boîtier absorbeur d'énergie dit "crashbox" selon l'une des revendications 1 à 12 est intégré respectivement entre un longeron (2) et la traverse, **caractérisé**
**en ce que** le profilé longitudinal (3) du crashbox (1) est déplaçable dans le longeron (2).

14. Agencement de pare-chocs pour véhicule automobile selon la revendication 13, **caractérisé en ce que** le profilé longitudinal (3) se retrousse dans le longeron (2), en partant de la plaque-bride (14), en maintenant l'immobilisation de l'extrémité (16) côté longeron sur la plaque-bride (14).
